# EUROPEAN PATENT APPLICATION

(11) **EP 4 319 214 A1**
(43) Date of publication of application: **07.02.2024**
(21) Application number: 21939646.2
(22) Date of filing: 06.05.2021
(51) Int. Cl.: H04W 4/40

(54) **METHOD AND APPARATUS FOR EXECUTING PROPOGATION DELAY COMPENSATION, COMPUTER DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN)
(74) Representative: Ipside
(86) International application number: PCT/CN2021/091944
(87) International publication number: WO 2022/232998

(57) **Abstract**

Disclosed are a method and an apparatus for performing propagation delay compensation (PDC), a computer device, and a storage medium, relating to the field of communication technology. The method includes the following. Perform a first PDC behavior based on first information, where the first PDC behavior includes at least one of the following behaviors: performing PDC, selecting or determining a target PDC mechanism, reporting PDC assistance information, or reporting the target PDC mechanism. In the solution, a terminal performs a PDC-related behavior based on the first information, so that during time synchronization between the terminal and a network side, the terminal can determine by itself whether to perform PDC and which mechanism is to be adopted to perform PDC. Therefore, with the solution above, it is possible to satisfy requirements of different terminals and requirements of different scenarios during time synchronization, thereby improving accuracy of time synchronization between the terminal and the network side.

## Description

### TECHNICAL FIELD

This disclosure relates to the field of communication technology, and more particularly to a method and an apparatus for performing propagation delay compensation (PDC), a computer device, and a storage medium.

### BACKGROUND

Based on transmission requirements on delay and reliability, time-sensitive network (TSN) is introduced in an industrial internet of things (IIoT).

In the related art, based on requirements of TSN service transmission, when transmitting a TSN service in a 5^{th}-generation (5G) mobile communication network, a time-synchronization accuracy requirement of less than 900 nanoseconds (ns) needs to be satisfied. In order to satisfy such accuracy requirement, propagation delay compensation (PDC) needs to be performed between a terminal and a base station.

### SUMMARY

Implementations of the disclosure provide a method and an apparatus for performing propagation delay compensation (PDC), a computer device, and a storage medium. The technical solutions are as follows.

In an aspect, a method for performing PDC is provided in implementations of the disclosure. The method is performed by a target terminal. The method includes the following. Perform a first PDC behavior based on first information, where the first PDC behavior includes at least one of the following behaviors: performing PDC, selecting or determining a target PDC mechanism, reporting PDC assistance information, or reporting the target PDC mechanism.

In an aspect, a method for performing PDC is provided in implementations of the disclosure. The method is performed by a first network-side device. The method comprises includes the following. Receive reported information of a target terminal, where the reported information includes at least one of: PDC assistance information, a time synchronization scenario, or a target PDC mechanism selected or determined by the target terminal. Perform a second PDC behavior based on the reported information.

In an aspect, a method for performing PDC is provided in implementations of the disclosure. The method is performed by a first network-side device. The method includes the following. Perform a third PDC behavior based on second information, where the third PDC behavior includes at least one of the following behaviors: sending a PDC configuration to a target terminal, performing PDC, transmitting or receiving PDC assistance information, determining a target PDC mechanism, configuring the target PDC mechanism for the target terminal, or indicating that the target terminal is to perform PDC.

In another aspect, an apparatus for performing PDC is provided in implementations of the disclosure. The apparatus is applied to a target terminal. The apparatus includes a behavior executing module. The behavior executing module is configured to perform a first PDC behavior based on first information, where the first PDC behavior includes at least one of the following behaviors: performing PDC, selecting or determining a target PDC mechanism, reporting PDC assistance information, or reporting the target PDC mechanism.

In another aspect, an apparatus for performing PDC is provided in implementations of the disclosure. The apparatus is applied to a first network-side device. The apparatus includes a reported-information receiving module and an executing module. The reported-information receiving module is configured to receive reported information of a target terminal, where the reported information includes at least one of: PDC assistance information, a time synchronization scenario, and a target PDC mechanism selected or determined by the target terminal. The executing module is configured to perform a second PDC behavior based on the reported information.

In another aspect, an apparatus for performing PDC is provided in implementations of the disclosure. The apparatus is applied to a first network-side device. The apparatus includes an executing module. The executing module is configured to perform a third PDC behavior based on second information, where the third PDC behavior includes at least one of the following behaviors: sending a PDC configuration to a target terminal, performing PDC, transmitting or receiving PDC assistance information, determining a target PDC mechanism, configuring the target PDC mechanism for the target terminal, or indicating that the target terminal is to perform PDC.

In another aspect, a computer device is provided in implementations of the disclosure. The computer device includes a processor, a memory, and a transceiver. The processor is configured to perform a first PDC behavior based on first information, where the first PDC behavior includes at least one of the following behaviors: performing a PDC, selecting or determining a target PDC mechanism, reporting PDC assistance information, or reporting the target PDC mechanism.

In another aspect, a computer device is provided in implementations of the disclosure. The computer device includes a processor, a memory, and a transceiver. The transceiver is configured to receive reported information of a target terminal, where the reported information includes at least one of: PDC assistance information, a time synchronization scenario, or a target PDC mechanism selected or determined by the target terminal. The processor is configured to perform a second PDC behavior based on the reported information.

In another aspect, a computer device is provided in implementations of the disclosure. The computer device includes a processor, a memory, and a transceiver. The processor is configured to perform a third PDC behavior based on second information, where the third PDC behavior includes at least one of the following behaviors: sending a PDC configuration to a target terminal, performing PDC, transmitting or receiving PDC assistance information, determining a target PDC mechanism, configuring the target PDC mechanism for the target terminal, or indicating that the target terminal is to perform PDC.

In another aspect, a computer device is provided in implementations of the disclosure. The computer device includes a processor, a memory, and a transceiver. The memory is configured to store computer programs. The computer programs are configured to be executed by the processor/the transceiver, to implement the foregoing method.

In another aspect, a computer-readable storage medium is further provided in implementations of the disclosure. The storage medium is configured to store computer programs. The computer programs are loaded and executed by a processor/transceiver, to implement the foregoing method.

In another aspect, a computer program product is provided. The computer program product includes computer instructions. The computer instructions are stored in a computer-readable storage medium and configured to be read from the computer-readable storage medium and executed by a processor of a computer device, to implement the foregoing method.

In another aspect, a chip is provided. The chip is configured to be run in a computer device, to cause the computer device to implement the foregoing method.

In another aspect, a computer program is provided. The computer program is executed by a processor of a computer device, to implement the foregoing method.

The technical solutions provided in implementations of the disclosure may have the following advantages.

The terminal performs a PDC-related behavior based on the first information, so that during time synchronization between the terminal and a network side, the terminal can determine by itself whether to perform PDC and which mechanism is to be adopted to perform PDC. Therefore, with the solution above, it is possible to satisfy requirements of different terminals and requirements of different scenarios during time synchronization, thereby improving accuracy of time synchronization between the terminal and the network side.

### BRIEF DESCRIPTION OF THE DRAWINGS

In order to describe more clearly technical solutions of implementations of the disclosure, the following will give a brief introduction to the accompanying drawings used for describing the implementations. Apparently, the accompanying drawings described below are merely some implementations of the disclosure. Based on these drawings, those of ordinary skill in the art can also obtain other drawings without creative effort.
FIG. 1 is a schematic diagram illustrating a network architecture for a communication system provided in implementations of the disclosure.
FIG. 2 is a flowchart of a method for performing propagation delay compensation (PDC) provided in implementations of the disclosure.
FIG. 3 is a flowchart of a method for performing PDC provided in implementations of the disclosure.
FIG. 4 is a flowchart of a method for performing PDC provided in implementations of the disclosure.
FIG. 5 is a flowchart of a method for performing PDC provided in implementations of the disclosure.
FIG. 6 is a flowchart of a method for performing PDC provided in implementations of the disclosure.
FIG. 7 is a block diagram of an apparatus for performing PDC provided in implementations of the disclosure.
FIG. 8 is a block diagram of an apparatus for performing PDC provided in implementations of the disclosure.
FIG. 9 is a block diagram of an apparatus for performing PDC provided in implementations of the disclosure.
FIG. 10 is a schematic structural diagram of a computer device provided in implementations of the disclosure.

### DETAILED DESCRIPTION

In order to make the objectives, technical solutions, and advantages of the disclosure clearer, implementations of the disclosure will be further described in detail below with reference to the accompanying drawings.

The network architecture and service scenario described in the implementations of the disclosure are intended to describe the technical solutions of the implementations of the disclosure more clearly, and do not constitute limitation on the technical solutions provided in the implementations of the disclosure. Those of ordinary skill in the art can appreciate that, with evolution of network architectures and emergence of new service scenarios, for similar technical problems, the technical solutions provided in the implementations of the disclosure are also applicable.

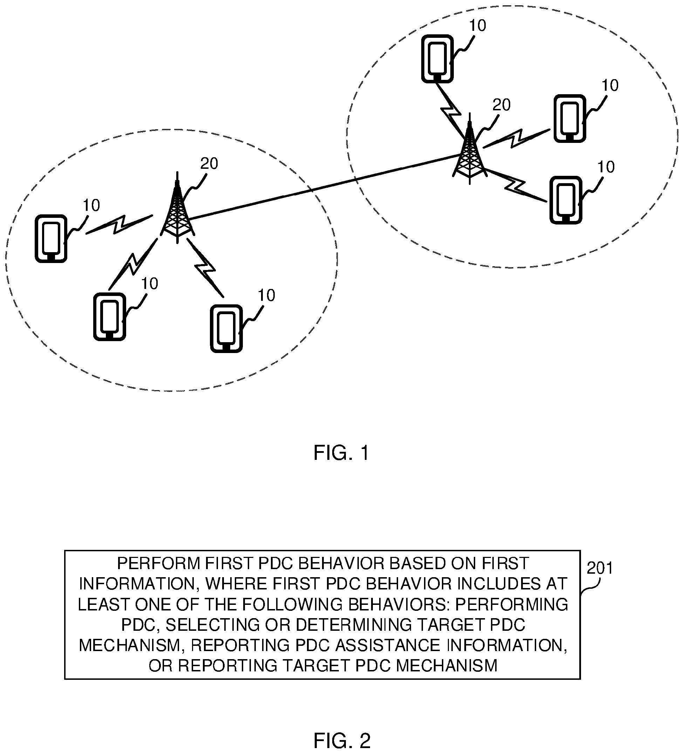

Refer to FIG. 1, which is a schematic diagram illustrating a network architecture for a communication system provided in implementations of the disclosure. The network architecture may include a terminal 10 and a base station 20.

The number of terminals 10 is usually multiple, and there may be one or more terminals 10 in each cell managed by the base station 20. The terminal 10 may include various devices having a wireless communication function such as handheld devices, in-vehicle devices, wearable devices, or computing devices, or other processing devices connected to a wireless modem, and various forms of user equipments (UE), mobile stations (MS), terminal devices, etc. For the convenience of illustration, in implementations of the disclosure, the foregoing devices are collectively referred to as "terminal".

The base station 20 is an apparatus deployed in an access network to provide a wireless communication function for the terminal 10. The base station 20 may include various forms of macro base stations, micro base stations, relay stations, access points, etc. In systems adopting different radio access technologies, devices having a function of the base station may be in different names, for example, in a 5^{th}-generation (5G) mobile communication new radio (NR) system, such device is referred to as a gNodeB or a gNB. With evolution of communication technologies, the name "base station" may change. For the convenience of illustration, in implementations of the disclosure, the foregoing apparatus for providing a wireless communication function for the terminal 10 is collectively referred to as "base station".

Optionally, the network architecture further includes other network devices (not illustrated in FIG. 1), such as a central control node (CCN), an access and mobility management function (AMF) device, a session management function (SMF), or a user plane function (UPF).

The "5G NR system" in implementation of the disclosure may also be referred to as a 5G system or an NR system, but the meaning thereof can be understood by those skilled in the art. The technical solutions described in the implementations of the disclosure may be applied to a 5G NR system, or may be applied to a future evolved system of the 5G NR system.

For better understanding, some related terms involved in the disclosure will be introduced below.

### 1) Time-sensitive network (TSN)

In ultra reliability and low latency communication (URLLC), it is required to support transmission of services, such as factory automation, transport industry, and electrical power distribution, etc., over a 5G system.

TSN is introduced in an industrial internet of things (IIoT) scenario involved in factory automation. In a TSN network, a 5G network acts as a TSN bridge and serves the TSN network and TSN services. Regarding this, a 5G NR system is required to have low delay and high clock-synchronization accuracy, so that during transmission of a factory automation service over the 5G network, the operation and connection of each point in a mechanical operation are accurate and meet time requirements.

### 2) TSN time-synchronization accuracy

Based on requirements of TSN service transmission, when transmitting a TSN service over 5G, it is necessary to satisfy a time-synchronization accuracy requirement of less than 900 nanoseconds (ns), so as to support different service scenarios, for example, support a control-to-control scenario and a smart grid scenario.

During time synchronization or propagation delay compensation (PDC), a PDC value may be obtained in two modes, so as to realize accurate synchronization with a network.

One is based on timing advance (TA).

The other is based on receive (RX)-transmit (TX) positioning.

Since in the related art, TSN is required to support different time synchronization scenarios, and time-synchronization compensation mechanisms adopted in different scenarios may be the same or different, it is necessary to take into consideration the issue regarding the same mechanism or different mechanisms. In addition, synchronization requirements of different UEs may also be different, and therefore, it is necessary to take into consideration the issue regarding how the network obtains such requirements. Regarding the above issues, a method for performing PDC between a terminal and a network-side device is provided in the following implementations of the disclosure.

Refer to FIG. 2, which is a flowchart of a method for performing PDC provided in implementations of the disclosure. The method may be performed by a target terminal, such as the terminal 10 in the communication system corresponding to the network architecture illustrated in FIG. 1. The method may include the following.

Step 201, perform a first PDC behavior based on first information, where the first PDC behavior includes at least one of the following behaviors: performing PDC, selecting or determining a target PDC mechanism, reporting PDC assistance information, or reporting the target PDC mechanism.

In the solution in implementations of the disclosure, a terminal performs a PDC-related behavior based on the first information, so that during time synchronization between the terminal and a network side, the terminal can determine by itself whether to perform PDC and which mechanism is to be adopted for performing PDC. Therefore, with the solution above, it is possible to satisfy requirements of different terminals and requirements of different scenarios during time synchronization, thereby improving accuracy of time synchronization between the terminal and the network side.

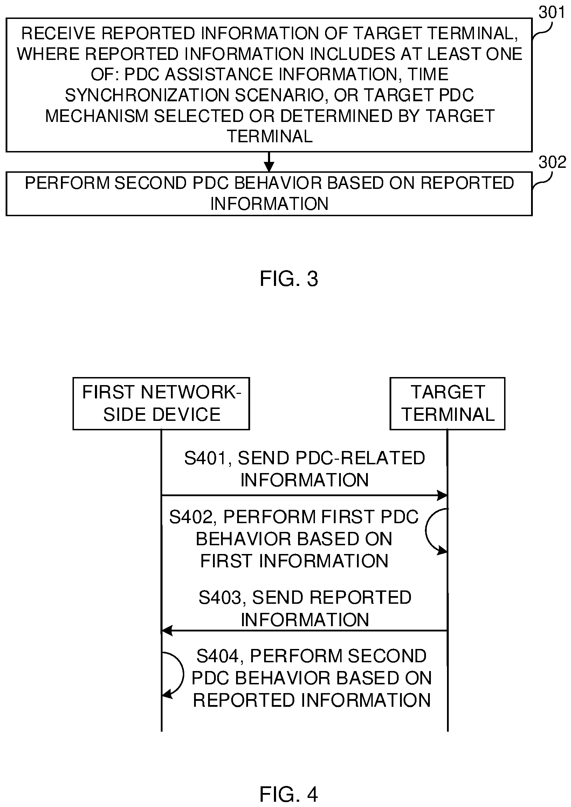

Refer to FIG. 3, which is a flowchart of a method for performing PDC provided in implementations of the disclosure. The method may be performed by a first network-side device. The method may include the following.

Step 301, receive reported information of a target terminal, where the reported information includes at least one of: PDC assistance information, a time synchronization scenario, or a target PDC mechanism selected or determined by the target terminal.

The time synchronization scenario may be a time synchronization scenario corresponding to the target terminal, or may be a time synchronization scenario corresponding to a second network-side device.

The second network-side device may be a core-network device or a CCN, such as a CCN in TSN.

Step 302, perform a second PDC behavior based on the reported information.

The first network-side device may be a base station, such as the base station 20 in the communication system corresponding to the network architecture illustrated in FIG. 1. Alternatively, the first network-side device may be other network devices such as a CCN, an AMF, an SMF, or a UPF.

In the solution in implementations of the disclosure, the first network-side device can perform a PDC-related behavior based on information reported by a terminal, so that during time synchronization between the terminal and the network side, the network-side device can determine, according to the information reported by the terminal, whether to perform PDC and which mechanism is to be adopted for performing PDC. Therefore, with the solution above, it is possible to satisfy requirements of different terminals and requirements of different scenarios during time synchronization, thereby improving accuracy of time synchronization between the terminal and the network side.

With reference to the solutions illustrated in FIG. 2 and FIG. 3, refer to FIG. 4, which is a flowchart of a method for performing PDC provided in implementations of the disclosure. The method may be performed interactively by a target terminal and a first network-side device. For example, the target terminal may be the terminal 10 in the communication system corresponding to the network architecture illustrated in FIG. 1. The first network-side device may be the base station 20 in the communication system corresponding to the network architecture illustrated in FIG. 1, or the first network-side device may be other network devices such as a CCN, an AMF, an SMF, or a UPF. The method may include the following.

Step 401, the first network-side device sends PDC-related information to the target terminal. Accordingly, the target terminal receives the PDC-related information from the first network-side device.

The PDC-related information includes at least one of: signaling that carries or indicates a PDC value or a TA value, signaling that carries or indicates a PDC mechanism, signaling that carries or indicates a scenario adopting PDC, signaling that carries or indicates a PDC initiating indication, configuration information for a reference signal corresponding to PDC, signaling that indicates a PDC value (such as new radio resource control (RRC) signaling or new media access control (MAC) signaling, for example, a new TA command (TAC) MAC-control element (MAC CE), etc.), or PDC assistance information (such as a round trip time (RTT) time difference for a base station).

The configuration information for the reference signal corresponding to PDC may be a combination of at least one of: a configuration for a sounding reference signal (SRS), a configuration for a preamble, a configuration for a demodulation reference signal (DM-RS), a configuration for a channel state information-reference signal (channel state information-RS, CSI-RS), a configuration for a synchronization signal and physical broadcast channel block (SSB), or a configuration for a positioning reference signal (PRS). For example, the configuration information for the reference signal corresponding to PDC may include the configuration for an SRS and the configuration for an SSB, or may include the configuration for an SRS and the configuration for a PRS, etc.

In implementations of the disclosure, the first network device may be a gNB. For example, the gNB configures a reference signal for performing PDC.

In implementations of the disclosure, the first network device may also be a core network or a CCN in a TSN network. For example, the core network or the CCN indicates a scenario of the UE (for example, indicates whether the scenario is a control-to-control scenario or a smart grid scenario), or indicates a correspondence between scenarios/sessions and selected PDC mechanisms.

In implementations of the disclosure, the first network-side device may firstly provide related information for PDC behavior decision to the target terminal, so as to indicate to the target terminal at least one of the PDC value, the TA value, the PDC mechanism, the scenario adopting PDC, the PDC initiating indication, or the configuration information for the reference signal for PDC (hereinafter, "PDC reference signal" for short). In this way, the target terminal can determine its own PDC behavior based on all or some of the information indicated by the first network-side device.

The PDC value refers to a value of PDC when performing PDC.

The TA value may be used for indicating or determining the PDC value, for example, the TA value may be twice the PDC value.

The PDC mechanism may include at least one of a TA-based PDC mechanism or an RTT-based PDC mechanism.

The PDC initiating indication may indicate that the terminal is to initiate a PDC procedure, or the PDC initiating indication may indicate to the terminal which PDC mechanism is to be initiated.

The configuration information for the PDC reference signal is used for indicating a configuration to be used for the target terminal and the first network-side device to transmit a reference signal for determining the PDC value.

The first network-side device may be a base station, a core-network device, or a CCN in TSN, etc.

PDC mechanisms configured for different terminals by the first network-side device may be the same or may be different.

That is, when configuring the PDC mechanism for different terminals, the first network-side device may configure the same PDC mechanism for multiple different terminals, or may configure different PDC mechanisms for multiple different terminals.

In implementations of the disclosure, PDC execution indication information configured for different terminals by the first network-side device is the same or different, where the PDC execution indication information is used for indicating whether to perform PDC.

The first network-side device may configure the PDC execution indication information for a terminal (indicate whether the corresponding terminal is to perform PDC). In addition, when configuring the PDC execution indication information for different terminals, the first network-side device may configure the same PDC execution indication information for multiple different terminals (that is, configure all of the multiple terminals to perform PDC or configure all of the multiple terminals not to perform PDC), or may configure different PDC execution indication information for multiple different terminals (for example, configure some of the multiple terminals to perform PDC, and configure the rest of the multiple terminals not to perform PDC).

In implementations of the disclosure, PDC support indication information configured for different terminals by the first network-side device is the same or different, where the PDC support information is used for indicating whether PDC is supported.

The first network-side device may configure the PDC support indication information for a terminal, (indicate whether the corresponding terminal supports PDC). In addition, when configuring the PDC support indication information for different terminals, the first network-side device may configure the same PDC support indication information for multiple different terminals (that is, configure all of the multiple terminals to support PDC or configure all of the multiple terminals not to support PDC), or may configure different PDC support indication information for multiple different terminals (for example, configure some of the multiple terminals to support PDC, and configure the rest of the multiple terminals not to support PDC).

Step 402, the target terminal performs a first PDC behavior based on first information.

The first PDC behavior includes at least one of the following behaviors: performing PDC, selecting or determining a target PDC mechanism, reporting PDC assistance information, or reporting the target PDC mechanism.

In implementations of the disclosure, according to the first information, the target terminal may perform PDC, or the target terminal may select or determine a PDC mechanism (such as a TA-based mechanism or an RTT-based mechanism), or the target terminal may report the PDC assistance information (such as transmitting a reference signal for determining PDC, or transmitting an RX-TX time difference), or the target terminal may report the PDC mechanism selected.

In implementations of the disclosure, the first information indicates at least one of the following.
1) Time synchronization scenario corresponding to the target terminal.
   The time synchronization scenario may be a UE-UPF single-link scenario, or a smart grid scenario, or a control-to-control scenario, etc.
2) Session service corresponding to the target terminal, where the session service includes a packet data unit (PDU) session or service that is established, or a PDU session or service that is to be established, or a PDU session or service that is supported.
   The session service corresponding to the target terminal may include a PDU session established by the target terminal, or a PDU session to be established the target terminal, or a PDU session supported by the target terminal. Alternatively, the session service corresponding to the target terminal may include a PDU service established by the target terminal, or a PDU service to be established by the target terminal, or a PDU service supported by the target terminal.
3) Whether signaling corresponding to PDC is received.
   The signaling corresponding to PDC may be signaling used for indicating PDC-function related information.
4) Whether a reference signal for performing PDC is configured.
5) Whether a time relationship of the reference signal for performing PDC is configured.
   Exemplarily, the time relationship of the reference signal performing PDC may include a time relationship between PDC and other signals/channels, etc.
6) Whether a PDC initiating indication is received.
7) Whether a PDC mechanism indication is received.
8) Whether signaling carrying a TA value is received.
9) Whether an interval between PDC indication information received and a target message received is less than or equal to a threshold, where the PDC indication information includes a PDC value, PDC assistance information, or a TA value, and the target message includes a system information block type 9 (SIB9) or a downlink (DL) information transfer (*DLinformationtransfer*) message.
   The PDC assistance information may include an RTT time difference between the target terminal and the first network-side device (for example, an NB).
   The RTT time difference may be used for indicating or determining the PDC value, for example, the RX-TX time difference may be one times the PDC value.
10) Capability information of the target terminal.
   The capability information of the target terminal indicates at least one of: whether the target terminal is a terminal requiring high accuracy, whether the target terminal is a terminal supporting TSN service transmission, whether the target terminal is a terminal that transmits a general precise time protocol (gPTP) message, whether the target terminal is a terminal that establishes a TSN service, whether the target terminal is a terminal that establishes an URLLC service, whether the target terminal supports high-speed movement, whether the target terminal supports a specified communication protocol, or a PDC mechanism supported by the target terminal.
11) Whether the PDC assistance information is received.
12) PDC mechanism supported by the target terminal.
13) Whether a movement speed of the target terminal exceeds a threshold.

The threshold of the movement speed may be defined in a protocol, or may be configured by a network-side device (such as a base station), or may be pre-configured.

In implementations of the disclosure, in terms of performing the first PDC behavior based on the first information, the target terminal may perform at least one of the following based on the first information.

S402a, based on first sub-information, determine whether the target terminal is to perform PDC and determine the target PDC mechanism.

The first sub-information indicates at least one of: the time synchronization scenario corresponding to the target terminal, the session service corresponding to the target terminal, a correspondence between a PDC mechanism and the time synchronization scenario corresponding to the target terminal or between the PDC mechanism and the session service corresponding to the target terminal, or the capability information of the target terminal.

In implementations of the disclosure, the target terminal determines whether to perform PDC and determines the selected PDC mechanism according to at least one of: a corresponding scenario (for example, control-to-control scenario or smart grid scenario), a PDU session/service established by the target terminal / a PDU session/service to be established by the target terminal / a PDU session/service supported by the target terminal, a correspondence between scenarios/services and PDC mechanisms, or a capability of the target terminal (for example, whether high-speed movement is supported, whether release 17 (R17) is supported, whether a TA-based PDC mechanism/an RTT-based PDC mechanism is supported, whether the target terminal is a UE requiring high accuracy / a UE supporting TSN service transmission / a UE that transmits a gPTP message / a UE that establishes a TSN/that establishes an URLLC service, etc.).

S402b, perform PDC or perform TA-based PDC, if the first information indicates that the signaling corresponding to PDC is received by the target terminal.

In implementations of the disclosure, if the signaling corresponding to PDC (such as an enhanced TAC MAC CE) or signaling carrying a TA value (such as a MAC CE, downlink control information (DCI), or RRC), is received by the target terminal, the target terminal will perform PDC or perform TA-based PDC.

S402c, perform PDC if the first information satisfies a first condition, where the first condition includes at least one of: the target terminal is configured with the time relationship of the reference signal for performing PDC, the PDC initiating indication is received by the target terminal, or the interval between the PDC indication information received by the target terminal and the target message received by the target terminal is less than or equal to the threshold.

In implementations of the disclosure, the target terminal can perform PDC if at least one of the following is satisfied: the target terminal is configured with the time relationship of the reference signal for performing PDC, the PDC initiating indication is received, or an interval between a PDC value or the PDC assistance information (such as a gNB RX-TX time difference) received and a SIB9 or *DLinformationtransfer* received is less than a threshold.

S402d, perform at least one of the following behaviors if the first information satisfies a second condition: performing PDC or determining the target PDC mechanism, where the second condition includes at least one of: the target terminal is configured with the time relationship of the reference signal for performing PDC, the PDC initiating indication is received by the target terminal, the interval between the PDC indication information received by the target terminal and the target message received by the target terminal is less than or equal to the threshold, or the PDC mechanism indication is received by the target terminal.

In implementations of the disclosure, the target terminal can perform PDC and/or determine the target PDC mechanism if at least one of the following is satisfied: the target terminal is configured with the time relationship of the reference signal for performing PDC, the PDC initiating indication is received by the target terminal, an indication regarding which PDC mechanism is to be performed is received by the target terminal, or an interval between a PDC value or the PDC assistance information (such as a gNB RX-TX time difference) received and a SIB9 or *DLinformationtransfer* received is less than a threshold.

S402e, determine the target PDC mechanism based on the PDC mechanism indication received by the target terminal, if the first information indicates that the PDC mechanism indication is received by the target terminal.

In implementations of the disclosure, if an indication regarding which PDC mechanism is to be performed is received by the target terminal, the target terminal can perform the corresponding PDC mechanism, for example, perform PDC based on the corresponding PDC mechanism.

S402f, perform PDC or perform RTT-based PDC, if the first information satisfies a third condition, where the third condition includes at least one of: the PDC assistance information is received by the target terminal, indication information for performing RTT-based PDC is received by the target terminal, or an interval between the PDC assistance information received by the target terminal and the target message received by the target terminal is less than or equal to a threshold.

In implementations of the disclosure, the target terminal can perform PDC and/or perform RTT-based PDC if at least one of the following is satisfied: the PDC assistance information (such as a gNB RX-TX time difference) is received by the target terminal, or an interval between the PDC assistance information (such as a gNB RX-TX time difference) received and a SIB9 or *DLinformationtransfer* received is less than a threshold.

S402g, perform TA-based PDC if the first information indicates that the PDC value is received by the target terminal or the first information indicates that the TA value is received by the target terminal.

In implementations of the disclosure, if the PDC value is received by the target terminal, the target terminal can perform a TA-based PDC mechanism.

The TA value may be indicated by one of RRC signaling, a MAC CE, or DCI, for example, the indication information of TA information may be carried in a TAC MAC CE, a random access response (RAR), or an enhanced TAC MAC CE.

S402h, perform PDC if the first information indicates that the movement speed of the target terminal exceeds the threshold or the first information indicates that a duration for which the movement speed of the target terminal exceeds the threshold reaches a threshold value.

In implementations of the disclosure, if the movement speed of the target terminal exceeds the threshold, the target terminal will perform PDC. Alternatively, if the duration for which the movement speed of the target terminal exceeds the threshold reaches duration X, the target terminal will perform PDC.

S402i, determine that a specified PDC mechanism is the target PDC mechanism or determine a PDC mechanism randomly, if the first information satisfies a fourth condition, where the fourth condition includes at least one of: the target terminal supports both TA-based PDC and RTT-based PDC, the target terminal is configured with both a configuration parameter for TA-based PDC and a configuration parameter for RTT-based PDC, both a condition for performing TA-based PDC and a condition for performing RTT-based PDC are satisfied, the time synchronization scenario is a specified scenario, or a TA-based PDC function of the target terminal and an RTT-based PDC function of the target terminal are both enabled.

The foregoing execution condition may further include: a time for obtaining the PDC value and obtaining time information falls within a certain duration, and/or one or more time-accuracy requirements can be satisfied.

The specified PDC mechanism is a PDC mechanism agreed in a protocol, a PDC mechanism with high priority, a PDC mechanism indicated by a network, a high-priority PDC mechanism configured by the network, or a default PDC mechanism.

In implementations of the disclosure, for the target terminal, if both a TA-based PDC mechanism and an RTT-based PDC mechanism are enabled, or both the configuration parameter for a TA-based PDC mechanism and the configuration parameter for an RTT-based PDC mechanism are configured, or both a function corresponding to a TA-based PDC mechanism and a function corresponding to an RTT-based PDC mechanism are enabled, the target terminal can select a specific PDC mechanism (a PDC mechanism agreed in a protocol, a PDC mechanism with high priority, a PDC mechanism indicated by the network, a high-priority PDC mechanism configured by the network, a default PDC mechanism), or the target terminal can select a PDC mechanism randomly.

In implementations of the disclosure, in response to the first PDC behavior including at least one of reporting the PDC assistance information or reporting the target PDC mechanism, the target terminal further performs at least one of: receiving PDC response information replied by the first network-side device, receiving the PDC assistance information (such as a gNB RX-TX time difference) sent by the first network-side device, transmitting or receiving a reference signal for determining PDC, receiving configuration information for the reference signal for determining PDC, or receiving signaling carrying the TA value; and then the target terminal performs PDC based on the PDC response information.

The PDC response information is used for indicating a PDC parameter, and the PDC parameter includes the PDC value or the TA value.

In implementations of the disclosure, when the target terminal performs, based on the first information, a behavior of reporting the PDC assistance information and/or reporting the target PDC mechanism, the target terminal may further receive the PDC response information replied by the first network-side device and/or receive the signaling carrying the TA value, and then perform PDC based on the PDC value or the TA value in the PDC response information or based on the TA value in the signaling.

Alternatively, when the target terminal performs, based on the first information, a behavior of reporting the PDC assistance information and/or reporting the target PDC mechanism, the target terminal may further perform at least one of: receiving the PDC assistance information sent by the first network-side device, receiving or transmitting the reference signal for determining PDC, or receiving the configuration information for the reference signal for determining PDC, so as to determine the PDC value; and then perform PDC based on the PDC value determined.

In implementations of the disclosure, if the first PDC behavior includes reporting the target PDC mechanism, and the target PDC mechanism is TA-based PDC, the PDC response information indicates the PDC value or the TA value. If the first PDC behavior includes reporting the target PDC mechanism, and the target PDC mechanism is RTT-based PDC, the PDC response information indicates a signal RX-TX time difference, a signal RTT time difference, or the PDC value. If the first PDC behavior includes reporting the PDC assistance information, the PDC response information indicates the signal RX-TX time difference or the signal RTT time difference.

In a possible implementation, the target terminal reports PDC behavior information to a second network-side device, where the PDC behavior information indicates that the target terminal determines to perform PDC, or the PDC behavior information indicates the target PDC mechanism that is selected or determined by the target terminal.

The PDC behavior information includes at least one of: a PDU session identity (ID) or a terminal ID.

The PDC behavior information may be reported to the second network-side device as follows. Report the PDC behavior information to the second network-side device periodically.

The PDC behavior information indicates that the second network-side device is to perform network management or network optimization based on terminal requirement information, where the terminal requirement information includes at least one of: a PDC mechanism required by each terminal, the number of terminals requiring each PDC mechanism, or the number of PDU sessions requiring each PDC mechanism.

The terminal requirement information is obtained based on the PDC behavior information reported by terminals in each cell corresponding to a base station. Alternatively, the terminal requirement information is obtained based on the PDC behavior information reported by terminals in each cell corresponding to the second network-side device.

In implementations of the disclosure, when determining to perform PDC or determining which PDC mechanism is to be performed, the target terminal may further report to a core network or a CCN a related behavior determined, so that the core network/ the CCN can determine a required PDC mechanism or the number of UEs/PDU sessions requiring a specific PDC mechanism, so as to facilitate performing network management or network optimization.

Optionally, the reporting may carry a PDU session ID(s) and/or a UE ID(s).

Optionally, the reporting may be periodic.

Optionally, the reporting may be based on each cell or all the cells corresponding to the base station.

Step 403, the target terminal sends reported information to the first network-side device. Accordingly, the first network-side device receives the reported information of the target terminal.

The reported information includes at least one of: the PDC assistance information, the time synchronization scenario, or the target PDC mechanism selected or determined by the target terminal.

In implementations of the disclosure, when determining, based on the first information, to report to the first network-side device, the target terminal may report at least one of: the PDC assistance information, a time synchronization scenario of the target terminal/the second network-side device, or the target PDC mechanism.

For example, according to at least one of: a corresponding scenario (control-to-control scenario or smart grid scenario), a PDU session/service established by the target terminal / a PDU session/service to be established by the target terminal / a PDU session/service supported by the target terminal, a correspondence between scenarios/services and PDC mechanisms, or a capability of the target terminal (whether high-speed movement is supported, whether R17 is supported, whether a TA-based PDC mechanism/an RTT-based PDC mechanism is supported, etc.), the target terminal determines to perform PDC or determines a PDC mechanism that is to be performed. Then the target terminal reports a PDC requirement(s) to the first network-side device.

Step 404, the first network-side device performs a second PDC behavior based on the reported information.

The second PDC behavior includes at least one of: performing PDC, selecting or determining the target PDC mechanism, sending a PDC parameter configured, sending the PDC assistance information, or sending PDC signaling or signaling carrying a TA value.

The first network-side device may determine, based on the reported information of the target terminal, at least one of: whether to perform PDC, which PDC mechanism is to be performed, which PDC parameter is to be configured, or which PDC signaling is to be sent.

In a possible implementation, in terms of performing the second PDC behavior based on the reported information, the first network-side device can perform at least one of the following based on the reported information.

S404a, in response to the reported information indicating the PDC assistance information, perform at least one of the following behaviors: performing PDC, selecting or determining that the target PDC mechanism is RTT-based PDC, or replying PDC response information to the target terminal, where the PDC response information indicates a signal RX-TX time difference or a signal RTT time difference.

For example, the target terminal reports the PDC assistance information (for example, transmits a reference signal for determining PDC or transmits an RX-TX time difference), and the first network-side device (for example, a gNB) determines to perform PDC or determines to perform RTT-based PDC. Accordingly, the gNB performs PDC, or sends a gNB RX-TX time difference to the target terminal such that the target terminal performs PDC.

S404b, in response to the reported information indicating that the target PDC mechanism is TA-based PDC, perform at least one of the following behaviors: performing PDC or replying the PDC response information to the target terminal, where the PDC response information indicates the PDC value or the TA value.

S404c, in response to the reported information indicating that the target PDC mechanism is RTT-based PDC, perform at least one of the following behaviors: performing PDC or replying the PDC response information to the target terminal, where the PDC response information indicates a signal RX-TX time difference, a signal RTT time difference, or a PDC response value.

For example, the target terminal reports the selected PDC mechanism, and the first network-side device (such as a gNB) determines to perform PDC or determines the PDC mechanism.

For example, the target terminal reports that a TA-based mechanism is selected. The gNB determines to perform PDC; or the gNB sends to the target terminal an enhanced TAC MAC CE that carries a PDC value, and then the target terminal performs PDC.

For example, the target terminal reports that an RTT-based mechanism is selected. The gNB determines to perform PDC; or the gNB sends a gNB RX-TX time difference to the target terminal, and then the target terminal performs PDC.

In a possible implementation, in response to the first network-side device being a base station, the first network-side device reports PDC behavior information to the second network-side device, where the PDC behavior information indicates that the target terminal determines to perform PDC, or the PDC behavior information indicates the target PDC mechanism that is selected or determined by the target terminal, or the PDC behavior information indicates that the first network-side device determines to perform PDC, or the PDC behavior information indicates a PDC mechanism to be performed that is determined by the first network-side device.

In implementations of the disclosure, if the first network-side device is a base station (such as a gNB), the first network-side device may also report the PDC behavior information to the second network-side device.

In the solution provided in the foregoing implementations of the disclosure, a method for a UE to determine, according to information from a network, whether to support PDC and how to support PDC is provided, thereby realizing accurate synchronization between the UE and the gNB.

In the solution in implementations of the disclosure, a terminal performs a PDC-related behavior based on the first information, so that during time synchronization between the terminal and a network side, the terminal can determine by itself whether to perform PDC and which mechanism is to be adopted to perform PDC. Accordingly, the first network-side device can perform a PDC-related behavior based on information reported by the terminal, so that during time synchronization between the terminal and the network side, the network-side device can determine, according to the information reported by the terminal, whether to perform PDC and which mechanism is to be adopted to perform PDC. Therefore, with the solution above, it is possible to satisfy requirements of different terminals and requirements of different scenarios during time synchronization, thereby improving accuracy of time synchronization between the terminal and the network side.

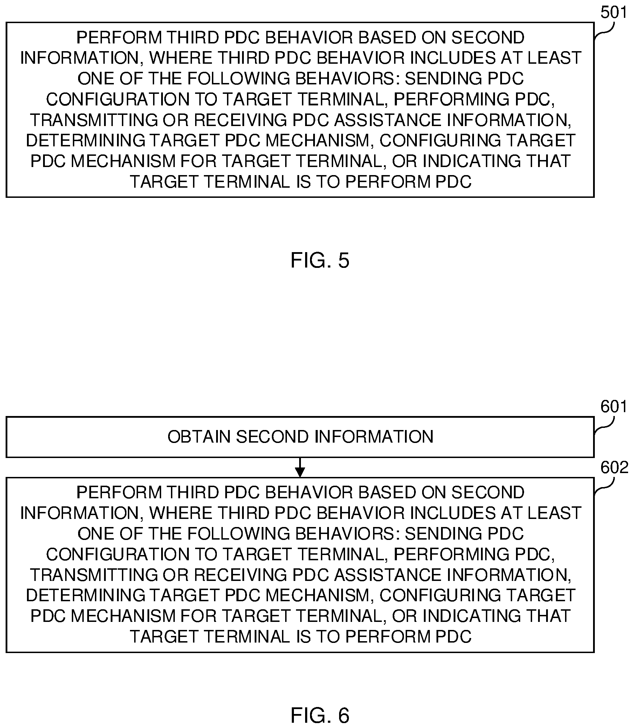

Refer to FIG. 5, which is a flowchart of a method for performing PDC provided in implementations of the disclosure. The method may be performed by a first network-side device. The method may include the following.

Step 501, perform a third PDC behavior based on second information, where the third PDC behavior includes at least one of the following behaviors: sending a PDC configuration to a target terminal, performing PDC, transmitting or receiving PDC assistance information, determining a target PDC mechanism, configuring the target PDC mechanism for the target terminal, or indicating that the target terminal is to perform PDC.

In implementations of the disclosure, based on the second information, the first network-side device may determine a configuration for configuring PDC, or determine to perform PDC, or determine a selected PDC mechanism, or determine to send the PDC assistance information (such as a gNB RX-TX time difference), etc.

As can be seen, in the solution in implementations of the disclosure, the first network-side device may perform a PDC-related behavior based on the second information, so that during time synchronization between a terminal and a network side, the network-side device can determine, according to related information, whether to perform PDC and which mechanism is to be adopted to perform PDC. Therefore, with the solution above, it is possible to satisfy requirements of different terminals and requirements of different scenarios during time synchronization, thereby improving accuracy of time synchronization between the terminal and the network side.

With reference to the solution illustrated in FIG. 5, referring to FIG. 6, which is a flowchart of a method for performing PDC provided in implementations of the disclosure. The method may be executed interactively by a target terminal and a first network-side device. For example, the target terminal may be the terminal 10 in the communication system corresponding to the network architecture illustrated in FIG. 1. The first network-side device may be the base station 20 in the communication system corresponding to the network architecture illustrated in FIG. 1, or the first network-side device may be other network devices such as a CCN, an AMF, an SMF, or a UPF. The method may include the following.

Step 601, obtain second information.

In implementations of the disclosure, the first network-side device may obtain the second information, where the second information includes at least one of: network-function indication information, capability information of the target terminal, whether PDC assistance information or dedicated signaling is reported by the target terminal, the PDC assistance information or the dedicated signaling reported by the target terminal, or a movement speed of the target terminal.

The second information may include an indication of an AMF/UPF/SMF/CCN (for example, indicating a selected PDC mechanism, a corresponding time synchronization scenario, a UE ID or a PDU session ID corresponding to a UE that is to perform PDC, a relationship between the UE ID and the PDC mechanism, a relationship between the UE ID and the scenario), a capability reported by the UE, whether the UE assistance information is reported, or a value (for example, true or false, TA-based or RTT-based, etc.) of the assistance information reported.

In a possible implementation, the network-function indication information indicates at least one of: the target PDC mechanism, a time synchronization scenario, an ID of the target terminal, a PDU session ID, a correspondence between the ID of the target terminal and the target PDC mechanism, or a correspondence between the ID of the target terminal and the time synchronization scenario.

In a possible implementation, the network-function indication information includes at least one of: AMF indication information, UPF indication information, SMF indication information, or CCN indication information.

In implementations of the disclosure, some or all of information required for the first network-side device to determine the PDC behavior may be obtained from a terminal, a core-network device, a CCN, etc.

Step 602, perform a third PDC behavior based on the second information, where the third PDC behavior includes at least one of the following behaviors: sending a PDC configuration to the target terminal, performing PDC, transmitting or receiving PDC assistance information, determining the target PDC mechanism, configuring the target PDC mechanism for the target terminal, or indicating that the target terminal is to perform PDC.

In implementations of the disclosure, PDC mechanisms configured for different terminals by the first network-side device are the same or different.

In implementations of the disclosure, PDC execution indication information configured for different terminals by the first network-side device is the same or different, where the PDC execution indication information is used for indicating whether to perform PDC; and/or PDC support indication information configured for different terminals by the first network-side device is the same or different, where the PDC support information is used for indicating whether PDC is supported.

In implementations of the disclosure, in terms of performing the third PDC behavior based on the second information, the first network-side device may perform at least one of the following based on the second information.

S602a, perform PDC or indicate that the target terminal is to perform PDC, in response to the network-function indication information indicating an entity for performing PDC or in response to the target terminal indicating the entity for performing PDC.

The first network-side device is exemplarily a gNB. If the AMF/UPF/SMF/CCN/UE determines that the entity performing PDC is the gNB or the UE, the gNB will determine, according to the indication of the AMF/UPF/SMF/CCN/UE, whether PDC is to be performed by the gNB itself or is to be performed by the UE.

S602b, in response to the network-function indication information indicating whether to perform PDC, perform at least one of the following behaviors: determining whether to perform PDC, determining whether to send the PDC configuration to the target terminal, or determining whether to send the PDC assistance information, a PDC value, or a TA value to the target terminal.

If whether to perform the PDC is determined by the AMF/UPF/SMF/CCN/UE, the gNB will determine, according to the indication, whether to perform PDC, or whether to send a corresponding configuration, or whether to send a corresponding assistance information or a PDC value.

S602c, in response to the network-function indication information indicating the target PDC mechanism, perform at least one of the following behaviors: determining the target PDC mechanism, or determining to send the PDC configuration, PDC signaling, or signaling carrying the TA value to the target terminal.

If the AMF/UPF/SMF/CCN/UE indicates the selected PDC mechanism, the gNB will configure the PDC configuration or send the PDC signaling according to the PDC mechanism indicated. For example, if an RTT-based scheme is selected, the gNB will configure, transmit, and/or receive related reference information (e. g., an SRS and a PRS), receive a UE RX-TX time difference, and perform PDC; or send a gNB RX-TX time difference such that the UE performs PDC. For another example, if TA-based PDC is selected, the gNB will send the PDC signaling, such as an enhanced TAC MAC CE, so that the UE can perform PDC.

S602d, in response to the network-function indication information indicating at least one of the time synchronization scenario or the target PDC mechanism, perform at least one of the following behaviors: determining whether to perform PDC or determining the target PDC mechanism.

If the AMF/UPF/SMF/CCN/UE indicates a time synchronization scenario corresponding to the gNB and/or indicates a relationship between the scenario and the PDC mechanism, the gNB will determine whether to perform PDC and/or which type of PDC is to be performed.

S602e, in response to the network-function indication information indicating a terminal ID or the PDU session ID, configure the target terminal corresponding to the terminal ID or the PDU session ID to perform PDC or configure to enable PDC for the target terminal corresponding to the terminal ID or the PDU session ID.

If the AMF/UPF/SMF/CCN/UE indicates a UE ID or the PDU session ID corresponding to a UE that is to perform PDC, the gNB will configure PDC for the corresponding UE or the UE corresponding to the PDU session, or configure to enable PDC for the corresponding UE or the UE corresponding to the PDU session.

S602f, determine the target PDC mechanism in response to the network-function indication information or the target terminal indicating at least one of the terminal ID, the PDU session ID, a correspondence between the terminal ID and a PDC mechanism, or a correspondence between the terminal ID and the time synchronization scenario.

If the AMF/UPF/SMF/CCN/UE indicates at least one of a UE ID or the PDU session ID corresponding to a UE that is to perform PDC, a relationship between the UE ID and the PDC mechanism, or a relationship between the UE ID and the scenario, the gNB will determine which PDC mechanism is to be performed.

S602g, in response to the capability information of the target terminal indicating that PDC capability is supported, send a PDC parameter, the PDC signaling, the signaling carrying the TA value, or the PDC assistance information to the target terminal.

If the capability reported by the UE is that the UE supports PDC capability, the gNB will determine to configure the PDC parameter or to send the PDC signaling or the PDC assistance information.

S602h, in response to the capability information of the target terminal indicating that TA-based PDC is supported and RTT-based PDC is supported, perform at least one of the following behaviors: determining the target PDC mechanism or determining, based on the target PDC mechanism, to send the PDC parameter, the PDC signaling, the signaling carrying the TA value, or the PDC assistance information to the target terminal.

If the capability reported by the UE is one of TA-based capability or RTT-based capability, the gNB will determine a selected PDC mechanism according to the capability; and then implement related configuration / transmit signaling / transmit assistance information.

S602i, perform at least one of the following behaviors: determining whether to perform PDC or determining the target PDC mechanism, in response to the second information indicating whether the PDC assistance information or the dedicated signaling is reported by the target terminal, or in response to a value of the PDC assistance information reported by the target terminal or a value of the dedicated signaling reported by the target terminal, or in response to the movement speed of the target terminal exceeding a threshold.

The gNB determines whether to perform PDC or determines which PDC mechanism is to be performed according to whether the UE assistance information or the dedicated signaling (such as a MAC CE, uplink control information (UCI), or other RRC request messages) is reported, or according to the value (such as true or false, TA-based or RTT-based) of the UE assistance information reported or the value (such as true or false, TA-based or RTT-based) of the dedicated signaling (a MAC CE, UCI, or other RRC request messages) reported, or whether the movement speed of the UE exceeds the threshold (for example, perform PDC if the movement speed of the UE exceeds the threshold, or perform PDC after the movement speed of the UE exceeds the threshold for threshold duration X), etc.

S602j, perform the following behaviors: determining that a specified PDC mechanism is the target PDC mechanism or selecting the target PDC mechanism randomly, and determining to indicate the target PDC mechanism to the target terminal, in response to a TA-based PDC mechanism and an RTT-based PDC mechanism are both enabled, or in response to a function for a TA-based PDC mechanism and a function for an RTT-based PDC mechanism are both enabled, or a condition for performing TA-based PDC and a condition for performing RTT-based PDC are both satisfied, or the time synchronization scenario is a specified scenario.

If a TA-based PDC mechanism and an RTT-based PDC mechanism are both enabled, or the function for a TA-based PDC mechanism and the function for an RTT-based PDC mechanism are both indicated as enabled, the gNB may select a specific PDC mechanism (for example, a PDC mechanism with high priority, a default PDC mechanism, etc.) or select a PDC mechanism randomly, and indicate the selected PDC mechanism to the UE.

In a possible implementation, in response to the first network-side device being a base station, PDC behavior information will be reported to a second network-side device, where the PDC behavior information indicates that the target terminal determines to perform PDC, or the PDC behavior information indicates the target PDC mechanism that is selected or determined by the target terminal, or the PDC behavior information indicates that the first network-side device determines to perform PDC, or the PDC behavior information indicates a PDC mechanism to be performed that is determined by the first network-side device.

In another possible implementation, the foregoing operation of reporting the PDC behavior information to the second network-side device may also be performed by the target terminal.

For the step of reporting the PDC behavior information to the second network-side device by the base station or the target terminal, reference can be made to the related elaborations in the implementations illustrated in FIG. 4, which will not be described in detail again herein.

In the solution in implementations of the disclosure, a method for the first network-side device (such as the gNB) to determine, according to information from a core network/CCN/target terminal (UE), whether to perform PDC and how to support PDC is provided, so as to realize accurate synchronization between the UE and the gNB.

As can be seen, in the solution in implementations of the disclosure, the first network-side device can perform a PDC-related behavior based on the second information, so that during time synchronization between a terminal and a network side, the network-side device can determine, according to related information, whether to perform PDC and which mechanism is to be adopted to perform PDC. Therefore, with the solution above, it is possible to satisfy requirements of different terminals and requirements of different scenarios during time synchronization, thereby improving accuracy of time synchronization between the terminal and the network side.

The following will describe apparatus implementations of the disclosure, which may be used for performing the method implementations of the disclosure. For details not disclosed in the apparatus implementations of the disclosure, reference can be made to the method implementations of the disclosure.

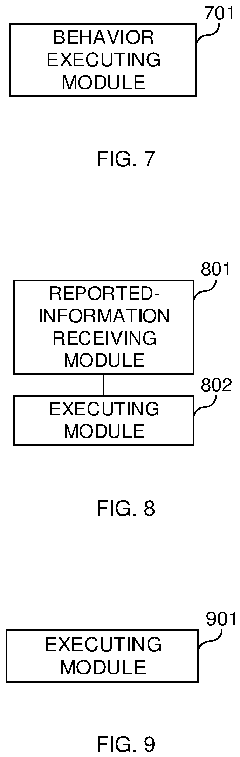

Refer to FIG. 7, which is a block diagram of an apparatus for performing PDC provided in implementations of the disclosure. The apparatus has a function for implementing the foregoing examples of the method for performing PDC, and the function may be implemented by hardware or may be implemented by hardware executing corresponding software. The apparatus may be the target terminal described above, or may be applied to the target terminal. As illustrated in FIG. 7, the apparatus may include a behavior executing module 701. The behavior executing module 701 is configured to perform a first PDC behavior based on first information, where the first PDC behavior includes at least one of the following behaviors: performing PDC, selecting or determining a target PDC mechanism, reporting PDC assistance information, or reporting the target PDC mechanism.

In a possible implementation, the first information indicates at least one of: a time synchronization scenario corresponding to the target terminal; a session service corresponding to the target terminal, where the session service includes a PDU session or service that is established, or a PDU session or service that is to be established, or a PDU session or service that is supported; whether signaling corresponding to PDC is received; whether a reference signal for performing PDC is configured; whether a time relationship of the reference signal for performing PDC is configured; whether a PDC initiating indication is received; whether a PDC mechanism indication is received; whether signaling carrying a TA value is received; whether an interval between PDC indication information received and a target message received is less than or equal to a threshold, where the PDC indication information includes a PDC value, the PDC assistance information, or the TA value, and the target message includes a SIB9 or a DL information transfer message; capability information of the target terminal; whether the PDC assistance information is received; a PDC mechanism supported by the target terminal; or whether a movement speed of the target terminal exceeds a threshold.

In a possible implementation, the capability information of the target terminal indicates at least one of: whether the target terminal is a terminal requiring high accuracy, whether the target terminal is a terminal supporting TSN service transmission, whether the target terminal is a terminal that transmits a gPTP message, whether the target terminal is a terminal that establishes a TSN service, whether the target terminal is a terminal that establishes an URLLC service, whether the target terminal supports high-speed movement, whether the target terminal supports a specified communication protocol, or the PDC mechanism supported by the target terminal.

In a possible implementation, the behavior executing module 701 is configured to perform at least one of the following based on the first information. The behavior executing module 701 is configured to determine whether the target terminal is to perform PDC and determine the target PDC mechanism based on first sub-information, where the first sub-information indicates at least one of: the time synchronization scenario corresponding to the target terminal, the session service corresponding to the target terminal, a correspondence between a PDC mechanism and the time synchronization scenario corresponding to the target terminal or between the PDC mechanism and the session service corresponding to the target terminal, or the capability information of the target terminal. The behavior executing module 701 is configured to perform PDC or perform TA-based PDC if the first information indicates that the signaling corresponding to PDC is received by the target terminal. The behavior executing module 701 is configured to perform PDC if the first information satisfies a first condition, where the first condition includes at least one of: the target terminal is configured with the time relationship of the reference signal for performing PDC, the PDC initiating indication is received by the target terminal, or the interval between the PDC indication information received by the target terminal and the target message received by the target terminal is less than or equal to the threshold. The behavior executing module 701 is configured to perform at least one of the following behaviors if the first information satisfies a second condition: performing PDC or determining the target PDC mechanism, where the second condition includes at least one of: the target terminal is configured with the time relationship of the reference signal for performing PDC, the PDC initiating indication is received by the target terminal, the interval between the PDC indication information received by the target terminal and the target message received by the target terminal is less than or equal to the threshold, or the PDC mechanism indication is received by the target terminal. The behavior executing module 701 is configured to determine the target PDC mechanism based on the PDC mechanism indication received by the target terminal, if the first information indicates that the PDC mechanism indication is received by the target terminal. The behavior executing module 701 is configured to perform PDC or perform RTT-based PDC if the first information satisfies a third condition, where the third condition includes at least one of: the PDC assistance information is received by the target terminal, indication information for performing RTT-based PDC is received by the target terminal, or an interval between the PDC assistance information received by the target terminal and the target message received by the target terminal is less than or equal to a threshold. The behavior executing module 701 is configured to perform TA-based PDC if the first information indicates that the PDC value is received by the target terminal or the first information indicates that the TA value is received by the target terminal. The behavior executing module 701 is configured to perform PDC if the first information indicates that the movement speed of the target terminal exceeds the threshold or the first information indicates that a duration for which the movement speed of the target terminal exceeds the threshold reaches a threshold value. The behavior executing module 701 is configured to determine that a specified PDC mechanism is the target PDC mechanism or determine a PDC mechanism randomly, if the first information satisfies a fourth condition, where the fourth condition includes at least one of: the target terminal supports both TA-based PDC and RTT-based PDC, the target terminal is configured with both a configuration parameter for TA-based PDC and a configuration parameter for RTT-based PDC, both a condition for performing TA-based PDC and a condition for performing RTT-based PDC are satisfied, the time synchronization scenario is a specified scenario, or a TA-based PDC function of the target terminal and an RTT-based PDC function of the target terminal are both enabled.

In a possible implementation, the specified PDC mechanism is a PDC mechanism agreed in a protocol, a PDC mechanism with high priority, a PDC mechanism indicated by a network, a high-priority PDC mechanism configured by the network, or a default PDC mechanism.

In a possible implementation, in response to the first PDC behavior including at least one of reporting the PDC assistance information and reporting the target PDC mechanism, the method further includes the following. Perform at least one of: receiving PDC response information replied by a first network-side device, receiving the PDC assistance information sent by the first network-side device, transmitting or receiving a reference signal for determining PDC, receiving configuration information for the reference signal for determining PDC, or receiving signaling carrying the TA value. Perform PDC based on the PDC response information.

In a possible implementation, the PDC response information is used for indicating a PDC parameter, and the PDC parameter includes the PDC value or the TA value.

In a possible implementation, if the first PDC behavior includes reporting the target PDC mechanism, and the target PDC mechanism is TA-based PDC, the PDC response information indicates the PDC value or the TA value. If the first PDC behavior includes reporting the target PDC mechanism, and the target PDC mechanism is RTT-based PDC, the PDC response information indicates a signal RX-TX time difference, a signal RTT time difference, or the PDC value. If the first PDC behavior includes reporting the PDC assistance information, the PDC response information indicates the signal RX-TX time difference or the signal RTT time difference.

In a possible implementation, the apparatus further includes a related-information receiving module. The related-information receiving module is configured to receive PDC-related information from the first network-side device before the behavior executing module 701 determines the first PDC behavior based on the first information, where the PDC-related information includes at least one of: signaling that carries or indicates a PDC value or a TA value, signaling that carries or indicates a PDC mechanism, signaling that carries or indicates a scenario adopting PDC, signaling that carries or indicates a PDC initiating indication, or configuration information for a reference signal corresponding to PDC.

In a possible implementation, the first network-side device is a base station, a core-network device, or a CCN in TSN.

In a possible implementation, the apparatus further includes a behavior-information reporting module. The behavior-information reporting module is configured to report PDC behavior information to a second network-side device, where the PDC behavior information indicates that the target terminal determines to perform PDC, or the PDC behavior information indicates the target PDC mechanism that is selected or determined by the target terminal.

In a possible implementation, the PDC behavior information includes at least one of: a PDU session ID and a terminal ID.

In a possible implementation, the behavior-information reporting module is configured to report the PDC behavior information to the second network-side device periodically.

In a possible implementation, the PDC behavior information indicates that the second network-side device is to perform network management or network optimization based on terminal requirement information, and the terminal requirement information includes at least one of: a PDC mechanism required by each terminal, the number of terminals requiring each PDC mechanism, or the number of PDU sessions requiring each PDC mechanism.

In a possible implementation, the terminal requirement information is obtained based on the PDC behavior information reported by terminals in each cell corresponding to a base station, or the terminal requirement information is obtained based on the PDC behavior information reported by terminals in each cell corresponding to the second network-side device.

Refer to FIG. 8, which a block diagram of an apparatus for performing PDC provided in implementations of the disclosure. The apparatus has a function for implementing the foregoing examples of the method for performing PDC, and the function may be implemented by hardware or may be implemented by hardware executing corresponding software. The apparatus may be the first network-side device described above, or may be applied to the first network-side device. As illustrated in FIG. 8, the apparatus may include a reported-information receiving module 801 and an executing module 802. The reported-information receiving module 801 is configured to receive reported information of a target terminal, where the reported information includes at least one of: PDC assistance information, a time synchronization scenario, and a target PDC mechanism selected or determined by the target terminal. The executing module 802 is configured to perform a second PDC behavior based on the reported information.

In a possible implementation, the second PDC behavior includes at least one of: performing PDC, selecting or determining the target PDC mechanism, sending a PDC parameter configured, sending the PDC assistance information, or sending PDC signaling or signaling carrying a TA value.

In a possible implementation, the second PDC behavior may be performed based on the reported information as follows. Perform at least one of the following based on the reported information. In response to the reported information indicating the PDC assistance information, perform at least one of the following behaviors: performing PDC, selecting or determining that the target PDC mechanism is RTT-based PDC, or replying PDC response information to the target terminal, where the PDC response information indicates a signal RX-TX time difference or a signal RTT time difference. In response to the reported information indicating that the target PDC mechanism is TA-based PDC, perform at least one of the following behaviors: performing PDC or replying the PDC response information to the target terminal, where the PDC response information indicates a PDC value or the TA value. In response to the reported information indicating that the target PDC mechanism is RTT-based PDC, perform at least one of the following behaviors: performing PDC or replying the PDC response information to the target terminal, where the PDC response information indicates a signal RX-TX time difference, a signal RTT time difference, or a PDC response value.

In a possible implementation, the apparatus further includes a related-information transmitting module. The related-information transmitting module is configured to send PDC-related information to the target terminal before the reported-information receiving module 801 receives the reported information of the target terminal, where the PDC-related information includes at least one of: signaling that carries or indicates a PDC value or a TA value, signaling that carries or indicates a PDC mechanism, signaling that carries or indicates a scenario adopting PDC, signaling that carries or indicates a PDC initiating indication, or configuration information for a reference signal corresponding to PDC.

In a possible implementation, PDC mechanisms configured for different terminals by the first network-side device are the same or different.

In a possible implementation, PDC execution indication information configured for different terminals by the first network-side device is the same or different, where the PDC execution indication information is used for indicating whether to perform PDC; or PDC support indication information configured for different terminals by the first network-side device is the same or different, where the PDC support information is used for indicating whether PDC is supported.

In a possible implementation, the apparatus further includes a behavior-information reporting module. The behavior-information reporting module is configured to report PDC behavior information to a second network-side device in response to the first network-side device being a base station, where the PDC behavior information indicates that the target terminal determines to perform PDC, or the PDC behavior information indicates the target PDC mechanism that is selected or determined by the target terminal, or the PDC behavior information indicates that the first network-side device determines to perform PDC, or the PDC behavior information indicates a PDC mechanism to be performed that is determined by the first network-side device.

Refer to FIG. 9, which a block diagram of an apparatus for performing PDC provided in implementations of the disclosure. The apparatus has a function for implementing the foregoing examples of the method for performing PDC, and the function may be implemented by hardware or may be implemented by hardware executing corresponding software. The apparatus may be the first network-side device described above, or may be applied to the first network-side device. As illustrated in FIG. 9, the apparatus may include an executing module 901. The executing module 901 is configured to perform a third PDC behavior based on second information, where the third PDC behavior includes at least one of the following behaviors: sending a PDC configuration to a target terminal, performing PDC, transmitting or receiving PDC assistance information, determining a target PDC mechanism, configuring the target PDC mechanism for the target terminal, or indicating that the target terminal is to perform PDC.

In a possible implementation, the second information includes at least one of: network-function indication information, capability information of the target terminal, whether the PDC assistance information or dedicated signaling is reported by the target terminal, the PDC assistance information or the dedicated signaling reported by the target terminal, or a movement speed of the target terminal.

In a possible implementation, the network-function indication information indicates at least one of: the target PDC mechanism, a time synchronization scenario, an ID of the target terminal, a PDU session ID, a correspondence between the ID of the target terminal and the target PDC mechanism, or a correspondence between the ID of the target terminal and the time synchronization scenario.

In a possible implementation, the network-function indication information includes at least one of: AMF indication information, UPF indication information, SMF indication information, or CCN indication information.

In a possible implementation, the executing module 901 is configured to perform at least one of the following based on the second information. The executing module 901 is configured to perform PDC or indicate that the target terminal is to perform PDC, in response to the network-function indication information indicating an entity for performing PDC or in response to the target terminal indicating the entity for performing PDC. The executing module 901 is configured to perform at least one of the following behaviors: determining whether to perform PDC, determining whether to send the PDC configuration to the target terminal, or determining whether to send the PDC assistance information, a PDC value, or a TA value to the target terminal, in response to the network-function indication information indicating whether to perform PDC. The executing module 901 is configured to perform at least one of the following behaviors: determining the target PDC mechanism, or determining to send the PDC configuration, PDC signaling, or signaling carrying the TA value to the target terminal, in response to the network-function indication information indicating the target PDC mechanism. The executing module 901 is configured to perform at least one of the following behaviors: determining whether to perform PDC or determining the target PDC mechanism, in response to the network-function indication information indicating at least one of the time synchronization scenario or the target PDC mechanism. The executing module 901 is configured to configure the target terminal corresponding to a terminal ID or the PDU session ID to perform PDC or configure to enable PDC for the target terminal corresponding to the terminal ID or the PDU session ID, in response to the network-function indication information indicating the terminal ID or the PDU session ID. The executing module 901 is configured to determine the target PDC mechanism in response to the network-function indication information or the target terminal indicating at least one of the terminal ID, the PDU session ID, a correspondence between the terminal ID and a PDC mechanism, or a correspondence between the terminal ID and the time synchronization scenario. The executing module 901 is configured to send a PDC parameter, the PDC signaling, the signaling carrying the TA value, or the PDC assistance information to the target terminal in response to the capability information of the target terminal indicating that PDC capability is supported. The executing module 901 is configured to perform at least one of the following behaviors: determining the target PDC mechanism or determining, based on the target PDC mechanism, to send the PDC parameter, the PDC signaling, the signaling carrying the TA value, or the PDC assistance information to the target terminal, in response to the capability information of the target terminal indicating that TA-based PDC is supported and RTT-based PDC is supported. The executing module 901 is configured to perform at least one of the following behaviors: determining whether to perform PDC or determining the target PDC mechanism, in response to the second information indicating whether the PDC assistance information or the dedicated signaling is reported by the target terminal, or in response to a value of the PDC assistance information reported by the target terminal or a value of the dedicated signaling reported by the target terminal, or in response to the movement speed of the target terminal exceeding a threshold. The executing module 901 is configured to perform the following behaviors: determining that a specified PDC mechanism is the target PDC mechanism or selecting the target PDC mechanism randomly, and determining to indicate the target PDC mechanism to the target terminal, in response to a TA-based PDC mechanism and an RTT-based PDC mechanism are both enabled, or in response to a function for a TA-based PDC mechanism and a function for an RTT-based PDC mechanism are both enabled, or a condition for performing TA-based PDC and a condition for performing RTT-based PDC are both satisfied, or the time synchronization scenario is a specified scenario.

In a possible implementation, PDC mechanisms configured for different terminals by the first network-side device are the same or different.

In a possible implementation, PDC execution indication information configured for different terminals by the first network-side device is the same or different, where the PDC execution indication information is used for indicating whether to perform PDC; or PDC support indication information configured for different terminals by the first network-side device is the same or different, where the PDC support information is used for indicating whether PDC is supported.

In a possible implementation, the apparatus further includes a behavior-information reporting module. The behavior-information reporting module is configured to report PDC behavior information to a second network-side device in response to the first network-side device being a base station, where the PDC behavior information indicates that the target terminal determines to perform PDC, or the PDC behavior information indicates the target PDC mechanism that is selected or determined by the target terminal, or the PDC behavior information indicates that the first network-side device determines to perform PDC, or the PDC behavior information indicates a PDC mechanism to be performed that is determined by the first network-side device.

It should be noted that, during implementation of the functions of the apparatus by the apparatus provided in the foregoing implementations, division into the foregoing functional modules is merely taken as an example for illustration. In actual applications, the foregoing functions may be allocated to different functional modules for implementation according to actual requirements, that is, the structure of the device is divided into different functional modules to implement all or some of the foregoing functions.

With respect to the apparatus in the foregoing implementations, the manner in which the modules implement the operations has been described in detail in the implementations regarding the method, and will not be described in detail again herein.

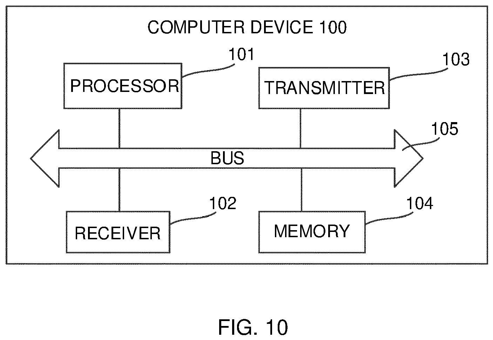

Refer to FIG. 10, which is a schematic structural diagram of a computer device 100 provided in implementations of the disclosure. The computer device 100 may include a processor 101, a receiver 102, a transmitter 103, a memory 104, and a bus 105.

The processor 101 includes one or more processing cores, and the processor 101 executes various function applications and information processing by running software programs and modules.

The receiver 102 and the transmitter 103 may be implemented as a communication assembly, and the communication assembly may be a communication chip. The communication chip may also be referred to as a transceiver.

The memory 104 is connected to the processor 101 via the bus 105.

The memory 104 may be configured to store computer programs. The processor 101 is configured to execute the computer programs, so as to implement various steps executed by the terminal in the foregoing method implementations.

In addition, the memory 104 may be implemented by any type of volatile storage device or non-volatile storage device or a combination thereof. The volatile storage device or non-volatile storage device includes, but is not limited to, a magnetic disk or an optical disk, an electrically erasable programmable read-only memory, an erasable programmable read-only memory, a static random-access memory, a read-only memory, a magnetic memory, a flash memory, and a programmable read-only memory.

In an exemplary implementation, the computer device includes a processor, a memory and a transceiver (the transceiver may include a receiver and a transmitter, where the receiver is configured to receive information, and the transmitter is configured to send information).

If the computer device is implemented as the target terminal, the processor can perform a first PDC behavior based on first information, where the first PDC behavior includes at least one of the following behaviors: performing PDC, selecting or determining a target PDC mechanism, reporting PDC assistance information, or reporting the target PDC mechanism.

If the computer device is implemented as the target terminal, the processor and the transceiver in the computer device involved in the implementations of the disclosure can execute the steps performed by the target terminal in the method illustrated in FIG. 2 or FIG. 4, which will not be described in detail again herein.

If the computer device is implemented as the first network-side device, the transceiver can receive reported information of a target terminal, where the reported information includes at least one of: PDC assistance information, a time synchronization scenario, or a target PDC mechanism selected or determined by the target terminal. The processor can perform a second PDC behavior based on the reported information.

Alternatively, if the computer device is implemented as the first network-side device, the processor can perform a third PDC behavior based on second information, where the third PDC behavior includes at least one of the following behaviors: sending a PDC configuration to a target terminal, performing PDC, transmitting or receiving PDC assistance information, determining a target PDC mechanism, configuring the target PDC mechanism for the target terminal, or indicating that the target terminal is to perform PDC.

If the computer device is implemented as the first network-side device, the processor and the transceiver in the computer device involved in the implementations of the disclosure can execute the steps performed by the first network-side device in the method illustrated in FIG. 3, FIG. 4, FIG. 5, or FIG. 6, which will not be described in detail again herein.

Implementations of the disclosure further provide a computer-readable storage medium. The storage medium is configured to store computer programs, and the computer programs are loaded and executed by a processor/transceiver to implement all or some of the steps of the method illustrated in any one of the foregoing FIG. 2 to FIG. 6.

The disclosure further provides a computer program product. The computer program product includes computer instructions. The computer instructions are stored in a computer-readable storage medium and configured to be read from the computer-readable storage medium and executed by a processor of a computer device, to implement all or some of the steps of the method illustrated in any one of FIG. 2 to FIG. 6.

The disclosure further provides a chip. The chip is configured to be run in a computer device, to cause the computer device to implement all or some of the steps of the method illustrated in any one of the foregoing FIG. 2 to FIG. 6.

The disclosure further provides a computer program. The computer program is executed by a processor of a computer device, to implement all or some of the steps of the method illustrated in any one of the foregoing FIG. 2 to FIG. 6.

Those skilled in the art can appreciate that in one or more of the above examples, the functions described in the implementations of the disclosure may be implemented by hardware, software, firmware, or any combination thereof. When implemented by software, the functions may be stored in a computer-readable medium or transmitted as one or more instructions or codes in the computer-readable medium. The computer-readable medium includes a computer storage medium and a communication medium, where the communication medium includes any medium that facilitates transfer of a computer program from one place to another, and the storage medium may be any available medium that can be accessed by a general-purpose computer or a special-purpose computer.

The foregoing elaborations are merely exemplary implementations of the disclosure, and are not intended for limiting the disclosure. Any modification, equivalent replacement, and improvement made within the concept and principle of the disclosure shall fall within the protection scope of the disclosure.

## Claims

1. A method for performing propagation delay compensation (PDC), being performed by a target terminal and comprising:
performing a first PDC behavior based on first information, wherein the first PDC behavior comprises at least one of the following behaviors: performing PDC, selecting or determining a target PDC mechanism, reporting PDC assistance information, or reporting the target PDC mechanism.

2. The method of claim 1, wherein the first information indicates at least one of:
a time synchronization scenario corresponding to the target terminal;
a session service corresponding to the target terminal, wherein the session service comprises a packet data unit (PDU) session or service that is established, or a PDU session or service that is to be established, or a PDU session or service that is supported;
whether signaling corresponding to PDC is received;
whether a reference signal for performing PDC is configured;
whether a time relationship of the reference signal for performing PDC is configured;
whether a PDC initiating indication is received;
whether a PDC mechanism indication is received;
whether signaling carrying a timing advance (TA) value is received;
whether an interval between PDC indication information received and a target message received is less than or equal to a threshold, wherein the PDC indication information comprises a PDC value, the PDC assistance information, or the TA value, and the target message comprises a system information block type 9 (SIB9) or a downlink (DL) information transfer message;
capability information of the target terminal;
whether the PDC assistance information is received;
a PDC mechanism supported by the target terminal; or
whether a movement speed of the target terminal exceeds a threshold.

3. The method of claim 2, wherein the capability information of the target terminal indicates at least one of: whether the target terminal is a terminal requiring high accuracy, whether the target terminal is a terminal supporting time sensitive network (TSN) service transmission, whether the target terminal is a terminal that transmits a general precise time protocol (gPTP) message, whether the target terminal is a terminal that establishes a TSN service, whether the target terminal is a terminal that establishes an ultra-reliability and low latency communication (URLLC) service, whether the target terminal supports high-speed movement, whether the target terminal supports a specified communication protocol, or the PDC mechanism supported by the target terminal.

4. The method of claim 2, wherein performing the first PDC behavior based on the first information comprises:
based on the first information, performing at least one of:
based on first sub-information, determining whether the target terminal is to perform PDC and determining the target PDC mechanism, wherein the first sub-information indicates at least one of: the time synchronization scenario corresponding to the target terminal, the session service corresponding to the target terminal, a correspondence between a PDC mechanism and the time synchronization scenario corresponding to the target terminal or between the PDC mechanism and the session service corresponding to the target terminal, or the capability information of the target terminal;
performing PDC or performing TA-based PDC, when the first information indicates that the signaling corresponding to PDC is received by the target terminal;
performing PDC when the first information satisfies a first condition, wherein the first condition comprises at least one of: the target terminal is configured with the time relationship of the reference signal for performing PDC, the PDC initiating indication is received by the target terminal, or the interval between the PDC indication information received by the target terminal and the target message received by the target terminal is less than or equal to the threshold;
performing at least one of the following behaviors when the first information satisfies a second condition: performing PDC or determining the target PDC mechanism, wherein the second condition comprises at least one of: the target terminal is configured with the time relationship of the reference signal for performing PDC, the PDC initiating indication is received by the target terminal, the interval between the PDC indication information received by the target terminal and the target message received by the target terminal is less than or equal to the threshold, or the PDC mechanism indication is received by the target terminal;
determining the target PDC mechanism based on the PDC mechanism indication received by the target terminal, when the first information indicates that the PDC mechanism indication is received by the target terminal;
performing PDC or performing round trip time (RTT)-based PDC, when the first information satisfies a third condition, wherein the third condition comprises at least one of: the PDC assistance information is received by the target terminal, indication information for performing RTT-based PDC is received by the target terminal, or an interval between the PDC assistance information received by the target terminal and the target message received by the target terminal is less than or equal to a threshold;
performing TA-based PDC when the first information indicates that the PDC value is received by the target terminal or the first information indicates that the TA value is received by the target terminal;
performing PDC when the first information indicates that the movement speed of the target terminal exceeds the threshold or the first information indicates that a duration for which the movement speed of the target terminal exceeds the threshold reaches a threshold value; or
determining that a specified PDC mechanism is the target PDC mechanism or determining a PDC mechanism randomly, when the first information satisfies a fourth condition, wherein the fourth condition comprises at least one of: the target terminal supports both TA-based PDC and RTT-based PDC, the target terminal is configured with both a configuration parameter for TA-based PDC and a configuration parameter for RTT-based PDC, both a condition for performing TA-based PDC and a condition for performing RTT-based PDC are satisfied, the time synchronization scenario is a specified scenario, or a TA-based PDC function of the target terminal and an RTT-based PDC function of the target terminal are both enabled.

5. The method of claim 4, wherein the specified PDC mechanism is a PDC mechanism agreed in a protocol, a PDC mechanism with high priority, a PDC mechanism indicated by a network, a high-priority PDC mechanism configured by the network, or a default PDC mechanism.

6. The method of any of claims 1 to 5, wherein in response to the first PDC behavior comprising at least one of reporting the PDC assistance information or reporting the target PDC mechanism, the method further comprises:
performing at least one of:
receiving PDC response information replied by a first network-side device;
receiving the PDC assistance information sent by the first network-side device;
transmitting or receiving a reference signal for determining PDC;
receiving configuration information for the reference signal for determining PDC; or
receiving signaling carrying the TA value; and
performing PDC based on the PDC response information.

7. The method of claim 6, wherein the PDC response information is used for indicating a PDC parameter, and the PDC parameter comprises the PDC value or the TA value.

8. The method of claim 7, wherein
when the first PDC behavior comprises reporting the target PDC mechanism, and the target PDC mechanism is TA-based PDC, the PDC response information indicates the PDC value or the TA value;
when the first PDC behavior comprises reporting the target PDC mechanism, and the target PDC mechanism is RTT-based PDC, the PDC response information indicates a signal receive (RX)-transmit (TX) time difference, a signal RTT time difference, or the PDC value; or
when the first PDC behavior comprises reporting the PDC assistance information, the PDC response information indicates the signal RX-TX time difference or the signal RTT time difference.

9. The method of claim 1, wherein before determining the first PDC behavior based on the first information, the method further comprises:
receiving PDC-related information from the first network-side device, wherein the PDC-related information comprises at least one of: signaling that carries or indicates a PDC value or a TA value, signaling that carries or indicates a PDC mechanism, signaling that carries or indicates a scenario adopting PDC, signaling that carries or indicates a PDC initiating indication, or configuration information for a reference signal corresponding to PDC.

10. The method of claim 9, wherein the first network-side device is a base station, a core-network device, or a central control node (CCN) in TSN.

11. The method of claim 1, further comprising:
reporting PDC behavior information to a second network-side device, wherein the PDC behavior information indicates that the target terminal determines to perform PDC, or the PDC behavior information indicates the target PDC mechanism that is selected or determined by the target terminal.

12. The method of claim 11, wherein the PDC behavior information comprises at least one of: a PDU session identity (ID) or a terminal ID.

13. The method of claim 11, wherein reporting the PDC behavior information to the second network-side device comprises:
reporting the PDC behavior information to the second network-side device periodically.

14. The method of claim 11, wherein the PDC behavior information indicates that the second network-side device is to perform network management or network optimization based on terminal requirement information, and the terminal requirement information comprises at least one of: a PDC mechanism required by each terminal, the number of terminals requiring each PDC mechanism, or the number of PDU sessions requiring each PDC mechanism.

15. The method of claim 14, wherein
the terminal requirement information is obtained based on the PDC behavior information reported by terminals in each cell corresponding to a base station; or
the terminal requirement information is obtained based on the PDC behavior information reported by terminals in each cell corresponding to the second network-side device.

16. A method for performing propagation delay compensation (PDC), being performed by a first network-side device and comprising:
receiving reported information of a target terminal, wherein the reported information comprises at least one of: PDC assistance information, a time synchronization scenario, or a target PDC mechanism selected or determined by the target terminal; and
performing a second PDC behavior based on the reported information.

17. The method of claim 16, wherein the second PDC behavior comprises at least one of:
performing PDC;
selecting or determining the target PDC mechanism;
sending a PDC parameter configured;
sending the PDC assistance information; or
sending PDC signaling or signaling carrying a timing advance (TA) value.

18. The method of claim 17, wherein performing the second PDC behavior based on the reported information comprises:
based on the reported information, performing at least one of:
in response to the reported information indicating the PDC assistance information, performing at least one of the following behaviors: performing PDC, selecting or determining that the target PDC mechanism is round trip time (RTT)-based PDC, or replying PDC response information to the target terminal, wherein the PDC response information indicates a signal receive (RX)-transmit (TX) time difference or a signal RTT time difference;
in response to the reported information indicating that the target PDC mechanism is TA-based PDC, performing at least one of the following behaviors: performing PDC or replying the PDC response information to the target terminal, wherein the PDC response information indicates a PDC value or the TA value; or
in response to the reported information indicating that the target PDC mechanism is RTT-based PDC, performing at least one of the following behaviors: performing PDC or replying the PDC response information to the target terminal, wherein the PDC response information indicates a signal RX-TX time difference, a signal RTT time difference, or a PDC response value.

19. The method of claim 16, wherein before receiving the reported information of the target terminal, the method further comprises:
sending PDC-related information to the target terminal, wherein the PDC-related information comprises at least one of: signaling that carries or indicates a PDC value or a TA value, signaling that carries or indicates a PDC mechanism, signaling that carries or indicates a scenario adopting PDC, signaling that carries or indicates a PDC initiating indication, or configuration information for a reference signal corresponding to PDC.

20. The method of claim 19, wherein PDC mechanisms configured for different terminals by the first network-side device are the same or different.

21. The method of claim 19, wherein
PDC execution indication information configured for different terminals by the first network-side device is the same or different, wherein the PDC execution indication information is used for indicating whether to perform PDC; or
PDC support indication information configured for different terminals by the first network-side device is the same or different, wherein the PDC support information is used for indicating whether PDC is supported.

22. The method of claim 16, further comprising:
reporting PDC behavior information to a second network-side device in response to the first network-side device being a base station, wherein the PDC behavior information indicates that the target terminal determines to perform PDC, or the PDC behavior information indicates the target PDC mechanism that is selected or determined by the target terminal, or the PDC behavior information indicates that the first network-side device determines to perform PDC, or the PDC behavior information indicates a PDC mechanism to be performed that is determined by the first network-side device.

23. A method for performing propagation delay compensation (PDC), being performed by a first network-side device and comprising:
performing a third PDC behavior based on second information, wherein the third PDC behavior comprises at least one of the following behaviors: sending a PDC configuration to a target terminal, performing PDC, transmitting or receiving PDC assistance information, determining a target PDC mechanism, configuring the target PDC mechanism for the target terminal, or indicating that the target terminal is to perform PDC.

24. The method of claim 23, wherein the second information comprises at least one of: network-function indication information, capability information of the target terminal, whether the PDC assistance information or dedicated signaling is reported by the target terminal, the PDC assistance information or the dedicated signaling reported by the target terminal, or a movement speed of the target terminal.

25. The method of claim 24, wherein the network-function indication information indicates at least one of: the target PDC mechanism, a time synchronization scenario, an identity (ID) of the target terminal, a packet data unit (PDU) session ID, a correspondence between the ID of the target terminal and the target PDC mechanism, or a correspondence between the ID of the target terminal and the time synchronization scenario.

26. The method of claim 24, wherein the network-function indication information comprises at least one of: access and mobility management function (AMF) indication information, user plane function (UPF) indication information, session management function (SMF) indication information, or central control node (CCN) indication information.

27. The method of claim 24, wherein performing the third PDC behavior based on the second information comprises:
based on the second information, performing at least one of:
performing PDC or indicating that the target terminal is to perform PDC, in response to the network-function indication information indicating an entity for performing PDC or in response to the target terminal indicating the entity for performing PDC;
in response to the network-function indication information indicating whether to perform PDC, performing at least one of the following behaviors: determining whether to perform PDC, determining whether to send the PDC configuration to the target terminal, or determining whether to send the PDC assistance information, a PDC value, or a timing advance (TA) value to the target terminal;
in response to the network-function indication information indicating the target PDC mechanism, performing at least one of the following behaviors: determining the target PDC mechanism, or determining to send the PDC configuration, PDC signaling, or signaling carrying the TA value to the target terminal;
in response to the network-function indication information indicating at least one of the time synchronization scenario or the time synchronization scenario or the target PDC mechanism, performing at least one of the following behaviors: determining whether to perform PDC or determining the target PDC mechanism;
in response to the network-function indication information indicating a terminal ID or the PDU session ID, configuring the target terminal corresponding to the terminal ID or the PDU session ID to perform PDC or configuring to enable PDC for the target terminal corresponding to the terminal ID or the PDU session ID;
determining the target PDC mechanism in response to the network-function indication information or the target terminal indicating at least one of the terminal ID, the PDU session ID, a correspondence between the terminal ID and a PDC mechanism, or a correspondence between the terminal ID and the time synchronization scenario;
in response to the capability information of the target terminal indicating that PDC capability is supported, sending a PDC parameter, the PDC signaling, the signaling carrying the TA value, or the PDC assistance information to the target terminal;
in response to the capability information of the target terminal indicating that TA-based PDC is supported and round trip time (RTT)-based PDC is supported, performing at least one of the following behaviors: determining the target PDC mechanism or determining, based on the target PDC mechanism, to send the PDC parameter, the PDC signaling, the signaling carrying the TA value, or the PDC assistance information to the target terminal;
performing at least one of the following behaviors: determining whether to perform PDC or determining the target PDC mechanism, in response to the second information indicating whether the PDC assistance information or the dedicated signaling is reported by the target terminal, or in response to a value of the PDC assistance information reported by the target terminal or a value of the dedicated signaling reported by the target terminal, or in response to the movement speed of the target terminal exceeding a threshold; or
performing the following behaviors: determining that a specified PDC mechanism is the target PDC mechanism or selecting the target PDC mechanism randomly, and determining to indicate the target PDC mechanism to the target terminal, in response to a TA-based PDC mechanism and an RTT-based PDC mechanism are both enabled, or in response to a function for a TA-based PDC mechanism and a function for an RTT-based PDC mechanism are both enabled, or a condition for performing TA-based PDC and a condition for performing RTT-based PDC are both satisfied, or the time synchronization scenario is a specified scenario.

28. The method of claim 23, wherein PDC mechanisms configured for different terminals by the first network-side device are the same or different.

29. The method of claim 23, wherein
PDC execution indication information configured for different terminals by the first network-side device is the same or different, wherein the PDC execution indication information is used for indicating whether to perform PDC; or
PDC support indication information configured for different terminals by the first network-side device is the same or different, wherein the PDC support information is used for indicating whether PDC is supported.

30. The method of claim 23, further comprising:
reporting PDC behavior information to a second network-side device in response to the first network-side device being a base station, wherein the PDC behavior information indicates that the target terminal determines to perform PDC, or the PDC behavior information indicates the target PDC mechanism that is selected or determined by the target terminal, or the PDC behavior information indicates that the first network-side device determines to perform PDC, or the PDC behavior information indicates a PDC mechanism to be performed that is determined by the first network-side device.

31. An apparatus for performing propagation delay compensation (PDC), being applied to a target terminal and comprising:
a behavior executing module configured to perform a first PDC behavior based on first information, wherein the first PDC behavior comprises at least one of the following behaviors: performing PDC, selecting or determining a target PDC mechanism, reporting PDC assistance information, or reporting the target PDC mechanism.

32. An apparatus for performing propagation delay compensation (PDC), being applied to a first network-side device and comprising:
a reported-information receiving module configured to receive reported information of a target terminal, wherein the reported information comprises at least one of: PDC assistance information, a time synchronization scenario, or a target PDC mechanism selected or determined by the target terminal; and
an executing module configured to perform a second PDC behavior based on the reported information.

33. An apparatus for performing propagation delay compensation (PDC), being applied to a first network-side device and comprising:
an executing module configured to perform a third PDC behavior based on second information, wherein the third PDC behavior comprises at least one of: sending a PDC configuration to a target terminal, performing PDC, transmitting or receiving PDC assistance information, determining a target PDC mechanism, configuring the target PDC mechanism for the target terminal, or indicating that the target terminal is to perform PDC.

34. A computer device, comprising:
a memory;
a transceiver; and
a processor configured to perform a first PDC behavior based on first information, wherein the first PDC behavior comprises at least one of the following behaviors: performing PDC, selecting or determining a target PDC mechanism, reporting PDC assistance information, or reporting the target PDC mechanism.

35. A computer device, comprising:
a memory;
a transceiver configured to receive reported information of a target terminal, wherein the reported information comprises at least one of: PDC assistance information, a time synchronization scenario, or a target PDC mechanism selected or determined by the target terminal; and
a processor configured to perform a second PDC behavior based on the reported information.

36. A computer device, comprising:
a memory;
a transceiver; and
a processor to perform a third PDC behavior based on second information, wherein the third PDC behavior comprises at least one of: sending a PDC configuration to a target terminal, performing PDC, transmitting or receiving PDC assistance information, determining a target PDC mechanism, configuring the target PDC mechanism for the target terminal, or indicating that the target terminal is to perform PDC.

37. A computer-readable storage medium configured to store computer programs which are configured to be executed by a processor/transceiver to implement the method of any of claims 1 to 30.

38. A chip configured to be run in a computer device, to cause the computer device to implement the method of any of claims 1 to 30.

39. A computer program product comprising computer instructions which are stored in a computer-readable storage medium and are configured to be read from the computer-readable storage medium and executed by a processor of a computer device, to cause the computer device to implement the method of any of claims 1 to 30.

40. A computer program being executed by a processor of an Internet-of-things (IoT) device, to implement the method of any of claims 1 to 30.
